# EUROPÄISCHE PATENTSCHRIFT

(11) **EP 1 169 717 B1**
(45) Veröffentlichungstag und Bekanntmachung des Hinweises auf die Patenterteilung: **27.06.2007**
(21) Anmeldenummer: 00914008.8
(22) Anmeldetag: 11.04.2000
(51) Int. Cl.: H01B 17/14

(54) **STÜTZISOLATOR**
SUPPORT INSULATOR
SUPPORT ISOLANT

(30) Priorität: 12.04.1999 DE 19916300; 18.10.1999 DE 19950110
(43) Veröffentlichungstag der Anmeldung: 09.01.2002
(73) Patentinhaber: ABB RESEARCH LTD., 8050 Zürich (CH)
(72) Erfinder: HEITZ, Christoph, CH-8353 Elgg/ZH (CH); PIEMONTESI, Marco, CH-6710 Biasca (CH); NIEMEYER, Lutz, CH-5242 Birr (CH)
(74) Vertreter: ABB Patent Attorneys
(86) Internationale Anmeldenummer: PCT/CH2000/000210
(87) Internationale Veröffentlichungsnummer: WO 2000/062309

(56) Entgegenhaltungen:
- EP-A- 0 281 323
- EP-A- 0 588 359
- US-A- 4 786 761

## Beschreibung

### TECHNISCHES GEBIET

Bei der Erfindung wird ausgegangen von einem elektrischen Isolator zum Abstützen einer hochspannungsführenden Elektrode auf einer Halterung nach dem Oberbegriff von Patentanspruch 1.

Ein derartiger Isolator wird beispielsweise in der Mittel- und Hochspannungstechnik zum Abstützen eines spannungsführenden Stromleiters gegenüber geerdeten Teilen einer Anlage verwendet.

### STAND DER TECHNIK

Ein elektrischer Isolator der eingangs genannten Art ist beispielsweise in DE 40 07 337 A1 beschrieben. Bei diesem Isolator sind Oberflächen eines Isolatorkörpers mit einer isolierenden Glasurmasse mit hoher Dielektrizitätskonstante zur Feldsteuerung überzogen.

Die Oberfläche des Isolatorkörpers ist eine dielektrische Schwachstelle des Isolators. Elektrisch leitende Partikel, wie beispielsweise Metallspäne, die beim Einbau in die Kapselung geraten, oder Ablösungen vom Leiter, die sich durch thermische Zyklen und der daraus resultierenden Bewegung bilden können, haben die Tendenz, aufgrund der hohen Dielektrizitätskonstante des Isolatorkörpers an der Oberfläche des Isolatorkörpers haften zu bleiben. Solche Partikel führen zu einer deutlich niedrigeren Durchschlagsspannung, da das elektrische Feld um die Partikel durch die Nähe des Isolatorkörpers verstärkt wird, es kommt zu einer Feldüberhöhung. Im Bereich dieser Feldüberhöhung bildet sich bezüglich einem Durchschlag eine kritische Zone.

In WO 98/22958 ist eine Elektrode zum Steuern elektrischer Felder in einem gasisolierten Raum beschrieben. Diese Elektrode mit einer elektrisch leitenden Oberfläche ist zumindest teilweise mit einem Material beschichtet, welches eine niedrige Dielektrizitätskonstante aufweist. Das Material enthält beispielsweise einen porösen Schaum, der dank dem eingeschlossenen Gas annähernd die gleiche Dielektrizitätskonstante aufweist wie das umgebende Gas, jedoch mit gegenüber dem Gas erhöhter dielektrischer Festigkeit.

Aus DE 3140652 ist eine Beschichtung eines isolierenden Tragelements für direkt aufsitzende oder in einem gewissen Abstand angeordnete Elektroden für Hochspannungsschaltanlagen bekannt. Diese Beschichtung besteht aus einem Material mit einer gegenüber dem Material des Tragelements kleineren Dielektrizitätskonstante.

### KURZE DARSTELLUNG DER ERFINDUNG

Der Erfindung, wie sie in Patentanspruch 1 angegeben ist, liegt die Aufgabe zugrunde, einen elektrischen Isolator der eingangs genannten Art zu schaffen, der sich trotz einem kompakten Aufbau bei hoher dielektrischer Belastung durch eine hohe Betriebssicherheit auszeichnet.

Die Oberfläche des Isolators mit einem Isolatorkörper ist zumindest teilweise aus einem Schutzkörper gebildet. Dieser weist eine Struktur mit einer im Vergleich zum Material des Isolatorkörpers kleineren mittleren Dielektrizitätskonstante auf. Dadurch kann im Bereich eines auf der Oberfläche des Isolators befindlichen leitenden Partikels eine zu grosse Feldüberhöhung vermieden werden. Um eine möglichst geringe Feldüberhöhung zu erreichen, sollte der Schutzkörper wenigstens die Dicke aufweisen, die der maximal zu berücksichtigenden Länge der Partikel entspricht.

In einer ersten Ausführungsform enthält der Schutzkörper einen Schaum. Im Gegensatz zu den aus dem Stand der Technik bekannten Beschichtungen von Isolatorkörpern dringt ein den Isolator umgebendes, gasförmiges Medium in die Poren des Schaums ein, wodurch eine mittlere Dielektrizitätskonstante des Schaums erreicht wird, die nahezu der des gasförmigen Mediums entspricht. Ganz besonders vorteilhaft sind syntaktische Schäume, da die Grösse der Poren gut kontrolliert werden kann, was für die dielektrische Festigkeit des Materials von grosser Bedeutung ist.

In einer weiteren Ausführungsform ist der Schutzkörper wabenförmig, oder aus vielen, parallel zu den Feldlinien angeordneten, dünnen Wänden aufgebaut. Durch die dünnen Wände und die damit verbundenen kleinen Auflageflächen ergeben sich vorteilhaft kleine kritische Zonen.

Ist der Isolator an einer geerdeten Halterung befestigt und/ oder stützt er einen elektrischen Leiter, so ist die Verwendung eines flexiblen oder elastischen Schaumes besonders vorteilhaft. Dieser ist an dem Leiter und/ oder an der geerdeten Halterung entlanggeführt, und verhindert so das Eindringen von Partikeln in einen allfällig vorhandenen Spalt im Bereich eines Tripelpunktes zwischen Isolatorkörper und Halterung.

Ein gasisoliertes System mit derart ausgebildeten Isolatoren kann kompakter und billiger realisiert und für höhere Spannungen ausgelegt werden, und weist zudem eine höhere Lebenserwartung auf.

### KURZE BESCHREIBUNG DER ZEICHNUNGEN

Die Erfindung wird nachfolgend anhand von Zeichnungen näher erläutert. Hierbei zeigt:
- Fig. 1 bis 3: eine Aufsicht auf einen axial geführten Schnitt durch den oberen Teil einer Anordnung mit drei Ausführungsformen des Isolators nach der Erfindung,
- Fig. 4: eine Aufsicht auf einen vergrössert dargestellten Teil der Anordnung nach Fig. 3,
- Fig. 5: eine Aufsicht auf einen axial geführten Schnitt durch eine Testvorrichtung mit einem Isolator nach dem Stand der Technik, und
- Fig. 6: eine Aufsicht auf einen axial geführten Schnitt durch eine Testvorrichtung mit einem Isolator nach der Erfindung.

### WEG ZUR AUSFÜHRUNG DER ERFINDUNG

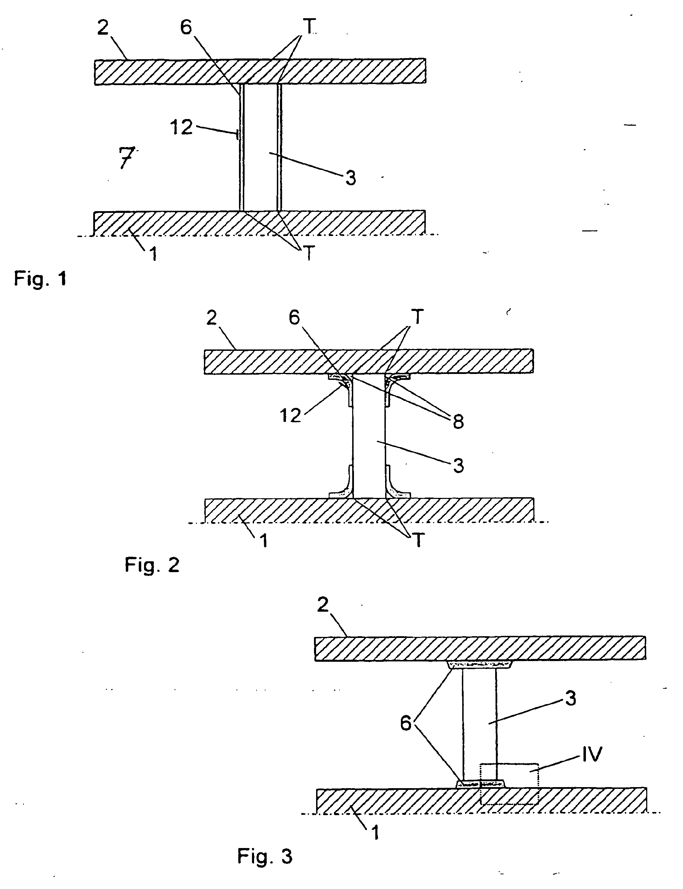

In allen Figuren beziehen sich gleiche Bezugszeichen auf gleichwirkende Teile. Fig. 1 zeigt eine Anordnung mit einem elektrischen Leiter 1, einer den Leiter umgebenden, geerdeten, rohrförmig und druckfest ausgebildeten Kapselung 2 aus einem elektrisch leitfähigen Material und einem scheibenförmig ausgebildeten Isolatorkörper 3 aus Epoxy-Materialien oder aus anderen Feststoffen mit einer relativ hohen Dielektrizitätskonstante (grösser als 4.0). Der Isolatorkörper 3 liegt auf der Kapselung 2 auf. Zwischen dem Leiter 1 und der Kapselung 2 befindet sich ein Hohlraum 7 der mit einem gasförmigen Medium gefüllt ist, zum Beispiel SF₆, unter atmosphärischem oder höherem Druck.

Auf dem Isolatorkörper 3 ist ein die Oberfläche des Isolators zumindest teilweise bildender Schutzkörper 6 angebracht. Dieser Schutzkörper 6 enthält eine Struktur mit einer gegenüber dem Material des Isolierkörpers 3 niedrigen, mittleren Dielektrizitätskonstante, vorzugsweise in der Nähe von 1. Dieser Schutzkörper kann beispielsweise einen offenporigen Schaum enthalten, welcher dank Gasaustausch mit dem im Hohlraum 7 befindlichen gasförmigen Medium etwa die gleiche dielektrische Festigkeit aufweist, wie das Medium selbst. Ein geschlossenporiger Schaum muss eine genügende dielektrische Festigkeit aufweisen. Der Schaum kann auch syntaktisch sein, das heisst, aus kleinen Hohlkugeln bestehen, die entweder miteinander versintert oder in einer massiven Matrix angeordnet sind. Die Grösse der Poren des syntaktischen Schaums kann variert werden. Mit kleinen Poren kann eine hohe dielektrische Festigkeit erreicht werden. Weiter kann das Material auch Aerogele, beispielsweise aus Silicon, enthalten, welche sich durch sehr niedrige Dielektrizitätskonstanten und dank der porösen Struktur durch gute dielektrische Festigkeit auszeichnen.

Aufgabe des Schutzkörpers 6 ist es, zu verhindern, dass elektrisch leitende Partikel 12 direkt auf dem Isolatorkörper 3 haften bleiben, insbesondere im Bereich von Tripelpunkten T im Bereich der Übergänge vom Isolator auf den Leiter 1 bzw. die Kapselung 2. Die Nähe des Isolatorkörpers 3 mit der relativ hohen Dielektrizitätskonstante würde zu einer Überhöhung der elektrischen Felder in der unmittelbaren Nähe der Partikel 12 führen. Dank dem Schutzkörper 6 mit der niedrigen Dielektrizitätskonstante ergeben sich in der Nähe der Partikel 12 geringere Feldüberhöhungen.

Der Schutzkörper 6 weist eine Dicke von mindestens 1 mm auf, was der typischen maximal zu berücksichtigenden Länge der Partikel entspricht.

Der Schutzkörper 6 kann auf dem Isolatorkörper aufgeklebt sein. Dies ist günstiger, als einen Zwei-Komponenten-Isolatorkörper mit vergleichbarer dielektrischer Festigkeit zu fertigen. Der Schutzkörper kann punktuell aufgeklebt sein, was weniger aufwendig ist, als ein flächiges Verkleben.

Zwischen Isolatorkörper 3 und Schutzkörper 6 kann durchaus ein dünner Hohlraum vorhanden sein, solange gewährleistet ist, dass sich in dem Hohlraum keine elektrisch leitende Partikel befinden.

In einer bevorzugten Ausführungsform des erfindungsgemässen Isolators gemäss Fig. 2 deckt der Schutzkörper 6 allenfalls zwischen Isolatorkörper 3 und Kapselung 2 vorhande Spalte 8 im Bereich der Tripelpunkte T ab. Dazu enthält der Schutzkörper 6 mit Vorteil einen flexiblen Schaum. Der Schutzkörper 6 ist einem Teil der Kapselung 2 und dem Leiter 1 entlanggezogen. Auf diese Weise kann verhindert werden, dass elektrisch leitende Partikel 12 in die Spalte 8 gelangen und dort im Bereich der Tripelpunkte T die dielektrischen Eigenschaften des Isolators beeinträchtigen.

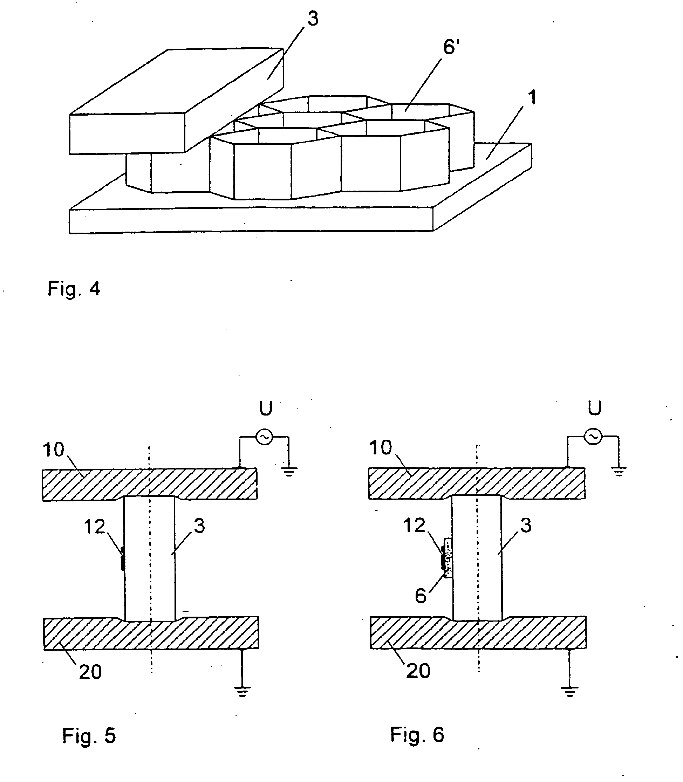

In einer weiteren Ausführungsform des erfindungsgemässen Isolators gemäss Fig. 3 ist zwischen dem Isolatorkörper 3 und der Kapselung 2 bzw. zwischen dem Isolatorkörper 3 und dem Leiter 1 ein Schutzkörper 6 angeordnet. Dieser Schutzkörper kann wie in Fig. 4 vergrössert dargestellt als dünnwandige, wabenförmige Schicht 6' ausgebildet sein. Statt Waben können auch senkrecht stehende dünne Wände oder Abstützungen vorgesehen sein. Wichtig ist, dass die Dicke dieser Wände kleiner ist als die typische Länge der elektrisch leitenden Partikel, welche zu einer Entladung führen könnten.

Anhand von Experimenten wurde die höhere Durchschlagsspannung eines elektrisch leitenden Teilchens auf einem Schutzkörper mit niedriger Dielektrizitätskonstante nachgewiesen. Fig. 5 und Fig. 6 zeigen eine Testvorrichtung mit zwei Elektroden 10 und 20, von denen die eine mit der Erde verbunden ist, während an der anderen die Prüfspannung (Hochspannung) U anliegt. Zwischen den Elektroden 10 und 20 ist ein herkömmlicher, unbeschichteter Epoxy-Stützer 3 angebracht, der einen Isolatorkörper simulieren soll. Für einen ersten Test (Fig. 5) ist in der Mitte des Stützers 3 ein 4 mm langes, elektrisch leitendes Teilchen 12 geklebt. Für einen zweiten Test (Fig. 6) ist in der Mitte des Stützers 3 ein Schützkörper 6 in Form einer 6 mm dicken Schicht und darauf das 4 mm lange Teilchen 12 befestigt. Die Testvorrichtung ist von Isoliergas (SF₆) unter erhöhtem Druck (5 bar) umgeben.

Der zweite Test mit der Schicht auf dem Stützer brachte eine Erhöhung der Durchschlagspannung gegenüber dem ersten Test ohne Beschichtung um rund 75%. Mit dem Schutzkörper auf dem isolatorkörper kann somit die Gefährlichkeit von elektrisch leitenden Partikeln wesentlich reduziert werden.

Neben dem Einsatz in gasisolierten Anlagen können solche Isolatoren auch in anderen gekapselten, insbesondere mit nichtleitend ausgebildeten Kapselungen, oder nichtgekapselten Anlagen, insbesondere Freiluftanlagen, eingesetzt werden.

### BEZEICHNUNGSLISTE

- 1: Elektrode, Stromleiter
- 2: Halterung, Kapselung
- 3: Isolator
- 6, 6': Schutzkörper
- 7: Gasraum, Hohlraum
- 8: Spalt
- 10, 20: Elektroden
- 12: Elektrisch leitendes Partikel/ Teilchen
- T: Tripelpunkt
- U: Spannungsquelle

## Patentansprüche

1. Elektrischer Isolator zum Abstützen einer hochspannungsführenden Elektrode (1) auf einer Halterung (2) mit
- einem Isolatorkörper (3) und
- mindestens einem die Oberfläche des Isolators zumindest teilweise bildenden Schutzkörper (6, 6'),
wobei der Schutzkörper (6, 6') eine gegenüber dem Material des Isolatorkörpers (3) kleinere Dielektrizftätskonstante aufweist,
**dadurch gekennzeichnet, dass**
- der Schutzkörper (6, 6') ein Material mit einer porigen Struktur aufweist.

2. Isolator nach Anspruch 1, **dadurch gekennzeichnet, dass**
- das Material des Schutzkörpers (6, 6') eine Dielektrizitätskonstante kleiner als 2.5, insbesondere kleiner als 1.5, aufweist.

3. Isolator nach einem der Ansprüche 1 oder 2, **dadurch gekennzeichnet, dass**
- der Schutzkörper (6, 6') eine Dicke von mindestens 1 mm aufweist.

4. Isolator nach einem der Ansprüche 1 bis 3, **dadurch gekennzeichnet, dass**
- der Schutzkörper (6, 6') flexibel ausgebildet ist.

5. Isolator nach einem der Ansprüche 1 bis 4, **dadurch gekennzeichnet, dass**
- der Schutzkörper (6) einen porösen Schaum enthält.

6. Isolator nach Anspruch 5, **dadurch gekennzeichnet, dass**
- der Schaum ein syntaktischer Schaum ist.

7. Isolator nach einem der Ansprüche 1 bis 4, **dadurch gekennzeichnet, dass**
- der Schutzkörper (6) ein Aerogel enthält.

8. Isolator nach einem der Ansprüche 1 bis 4, **dadurch gekennzeichnet, dass**
- der Schutzkörper (6, 6') viele dünne Wände aufweist, deren Dicke jeweils kleiner als 1,5 mm ist.

9. Isolator nach Anspruch 8, **dadurch gekennzeichnet, dass**
- der Schutzkörper (6') wabenförmig aufgebaut ist.

10. Isolator nach einem der Ansprüche 1 bis 9, **dadurch gekennzeichnet, dass**
- der Schutzkörper (6, 6') mit dem Isolator (3) verklebt ist.

11. Isolator nach einem der Ansprüche 1 bis 10, **dadurch gekennzeichnet, dass**
- der Schutzkörper (6, 6') mindestens in einem Bereich, in dem der Isolator an die Halterung (2) angrenzt und/ oder in einem Bereich, in dem der Isolator an die Elektrode (1) angrenzt angeordnet ist.

12. Isolator nach einem der Ansprüche 1 bis 11, **dadurch gekennzeichnet, dass**
- der Schutzkörper (6') zumindest teilweise zwischen dem Isolatorkörper (3) und der Halterung (2) und/ oder dem Isolatorkörper (3) und der Elektrode (1) angeordnet ist.

13. Isolator nach einem der Ansprüche 1 bis 12, **dadurch gekennzeichnet, dass**
- der Schutzkörper (6, 6') mindestens entlang einem Teil der Elektrode (1) und/oder entlang einem Teil der Halterung (2) erstreckt ist.

14. Isolator nach einem der Ansprüche 1 bis 13, **dadurch gekennzeichnet, dass**
- die Halterung (2) elektrisch leitfähig ausgebildet ist.

## Claims

1. Electrical insulator for the purpose of supporting a high-voltage-carrying electrode (1) on a support (2) having
- an insulator body (3), and
- at least one protective body (6, 6') which at least partially forms the surface of the insulator,
the protective body (6, 6') having a lower dielectric constant than the material of the insulator body (3),
**characterized in that**
- the protective body (6, 6') has a material having a porous structure.

2. Insulator according to Claim 1, **characterized in that**
- the material of the protective body (6, 6') has a dielectric constant which is less than 2.5, in particular less than 1.5.

3. Insulator according to either of Claims 1 and 2,
**characterized in that**
- the protective body (6, 6') has a thickness of at least 1 mm.

4. Insulator according to one of Claims 1 to 3,
**characterized in that**
- the protective body (6, 6') is of flexible design.

5. Insulator according to one of Claims 1 to 4,
**characterized in that**
- the protective body (6) contains a porous foam.

6. Insulator according to Claim 5, **characterized in that**
- the foam is a syntactic foam.

7. Insulator according to one of Claims 1 to 4,
**characterized in that**
- the protective body (6) contains an aerogel.

8. Insulator according to one of Claims 1 to 4,
**characterized in that**
- the protective body (6, 6') has many thin walls, whose thickness is in each case less than 1.5 mm.

9. Insulator according to Claim 8, **characterized in that**
- the protective body (6') has a honeycombed design.

10. Insulator according to one of Claims 1 to 9,
**characterized in that**
- the protective body (6, 6') is adhesively bonded to the insulator (3).

11. Insulator according to one of Claims 1 to 10,
**characterized in that**
- the protective body (6, 6') is arranged at least in a region in which the insulator adjoins the support (2) and/or in a region in which the insulator adjoins the electrode (1).

12. Insulator according to one of Claims 1 to 11,
**characterized in that**
- the protective body (6') is arranged at least partially between the insulator body (3) and the support (2) and/or the insulator body (3) and the electrode (1).

13. Insulator according to one of Claims 1 to 12,
**characterized in that**
- the protective body (6, 6') extends at least along part of the electrode (1) and/or along part of the support (2).

14. Insulator according to one of Claims 1 to 13,
**characterized in that**
- the support (2) is designed to be electrically conductive.

## Revendications

1. Isolateur électrique destiné à soutenir une électrode sous haute tension (1) sur un support (2) comprenant
- un corps d'isolateur (3) et
- au moins un corps de protection (6, 6') qui forme au moins partiellement la surface de l'isolateur,
- le corps de protection (6, 6') présentant une constante diélectrique inférieure à celle du matériau du corps d'isolateur (3),
**caractérisé en ce que**
- le corps de protection (6, 6') présente un matériau ayant une structure poreuse.

2. Isolateur selon la revendication 1, **caractérisé en ce que** le matériau du corps de protection (6, 6') présente une constante diélectrique inférieure à 2,5, notamment inférieure à 1,5.

3. Isolateur selon l'une des revendications 1 ou 2, **caractérisé en ce que** le corps de protection (6, 6') présente une épaisseur minimale de 1 mm.

4. Isolateur selon l'une des revendications 1 à 3, **caractérisé en ce que** le corps de protection (6, 6') est de structure flexible.

5. Isolateur selon l'une des revendications 1 à 4, **caractérisé en ce que** le corps de protection (6) contient une mousse poreuse.

6. Isolateur selon la revendication 5, **caractérisé en ce que** la mousse est une mousse syntactique.

7. Isolateur selon l'une des revendications 1 à 4, **caractérisé en ce que** le corps de protection (6) contient un aérogel.

8. Isolateur selon l'une des revendications 1 à 4, **caractérisé en ce que** le corps de protection (6, 6') présente de nombreuses parois minces dont l'épaisseur est à chaque fois inférieure à 1,5 mm.

9. Isolateur selon la revendication 8, **caractérisé en ce que** le corps de protection (6') est structuré en nid d'abeille.

10. Isolateur selon l'une des revendications 1 à 9, **caractérisé en ce que** le corps de protection (6, 6') est collé avec l'isolateur (3).

11. Isolateur selon l'une des revendications 1 à 10, **caractérisé en ce que** le corps de protection (6, 6') est disposé au moins dans une zone dans laquelle l'isolateur est contigu au support (2) et/ou dans une zone dans laquelle l'isolateur est contigu à l'électrode (1).

12. Isolateur selon l'une des revendications 1 à 11, **caractérisé en ce que** le corps de protection (6') est disposé au moins partiellement entre le corps d'isolateur (3) et le support (2) et/ou le corps d'isolateur (3) et l'électrode (1).

13. Isolateur selon l'une des revendications 1 à 12, **caractérisé en ce que** le corps de protection (6, 6') s'étend au moins le long d'une partie de l'électrode (1) et/ou le long d'une partie du support (2).

14. Isolateur selon l'une des revendications 1 à 13, **caractérisé en ce que** le support (2) est réalisé conducteur d'électricité.
